# EUROPÄISCHE PATENTSCHRIFT

(11) **EP 2 783 126 B1**
(45) Veröffentlichungstag und Bekanntmachung des Hinweises auf die Patenterteilung: **09.03.2016**
(21) Anmeldenummer: 12758767.3
(22) Anmeldetag: 24.08.2012
(51) Int. Cl.: F16D 65/28, B60T 17/08

(54) **FEDERSPEICHERBREMSZYLINDER, BEISPIELSWEISE FÜR KRAFTFAHRZEUGBREMSEN**
SPRING ACCUMULATOR BRAKE CYLINDER, FOR EXAMPLE FOR MOTOR VEHICLE BRAKES
CYLINDRE DE FREIN À RESSORT ACCUMULATEUR, DESTINÉ PAR EXEMPLE À DES FREINS DE VÉHICULE À MOTEUR

(30) Priorität: 25.11.2011 DE 102011119437
(43) Veröffentlichungstag der Anmeldung: 01.10.2014
(73) Patentinhaber: WABCO GmbH, 30453 Hannover (DE)
(72) Erfinder: SCHRADER, Frank, 30916 Isernhagen (DE)
(74) Vertreter: Lauerwald, Jörg
(86) Internationale Anmeldenummer: PCT/EP2012/003573
(87) Internationale Veröffentlichungsnummer: WO 2013/075762

(56) Entgegenhaltungen:
- DE-A1-102010 006 048
- DE-A1-102010 006 049
- DE-B- 1 203 141

## Beschreibung

Die Erfindung betrifft einen Federspeicherbremszylinder, mit einem im Gehäuse des Federspeicherbremszylinders abgedichtet geführten, hutförmig mit einem zylindrischen Mittelteil und einem radial abstehenden Flansch ausgebildeten Kolben, in dem eine sich einerseits an einer Querwand des Kolbens und andererseits an einer Querwand des Gehäuses des Federspeicherbremszylinders abstützende vorgespannte Druckfeder angeordnet ist, wobei zwischen dem zylindrischen Mittelteil und dem Gehäuse des Federspeicherbremszylinders ein mit Druckluft beaufschlagbarer Ringraum gebildet ist, und bei dem die Querwand des Kolbens an einem Betriebsbremskolben eines mit dem Federspeicherbremszylinder zu einer Baueinheit zusammengefassten Druckluftbremszylinder anlegbar ist, um diesen bei Druckabfall im Ringraum mittels der Druckfeder im Bremssinn zu betätigen.

Ein derartiger Federspeicherbremszylinder ist aus der DE 1 203 141 A1 bekannt. Bei diesem Federspeicherbremszylinder erfolgt die Führung des hutförmig ausgebildeten Kolbens bei einer Axialbewegung mittels eines radialen Flansches an einer zylindrischen Innenseite des Gehäuses des Federspeicherbremszylinders. Der zylindrische Mittelteil dieses Kolbens erstreckt sich mit radialem Spiel durch eine axiale Öffnung in einer Trennwand zwischen dem Federspeicherbremszylinder und dem Druckluftbremszylinder. In einer Ringnut in der Öffnung der Trennwand ist ein elastischer Dichtring angeordnet, der abdichtend auf der Außenseite des zylindrischen Mittelteils des Kolbens aufliegt, diesen aber nicht führt. Durch eine nicht vermeidbare Querkraft der vorgespannten Druckfeder in Verbindung mit der auf den Betriebsbremskolben bei Druckbeaufschlagung wirkenden Kraft neigt der Kolben des bekannten Federspeicherbremszylinders zum Kippen und kann beim Belüften des Ringraums des Federspeicherbremszylinders in der gekippten Stellung verharren und so blockiert sein, dass sich das mit der Baueinheit Federspeicherbremszylinder-Druckluftbremszylinder ausgerüstete Fahrzeug ungewollt nicht mehr bewegen lässt.

Den gleichen technischen Nachteil weisen die aus der DE 10 2010 006 048 A1 und DE 10 2010 006 049 A1 bekannten Federspeicherbremszylinder auf, bei denen der Kolben des Federspeicherbremszylinders radial außen am Kolbenflansch ein ringförmiges Dichtelement sowie ein ringförmiges Führungselement aufweist, welche beide an einer radialen Innfläche des Gehäuses des Federspeicherbremszylinders anliegen. Auch bei diesen Federspeicherbremszylindern ist der Kolben nachteilig nur radial außen geführt.

Vor diesem Hintergrund liegt der Erfindung die Aufgabe zugrunde, die bekannten Federspeicherbremszylinder dahingehend zu verbessern, dass ein Kippen des hutförmig ausgebildeten Kolbens im Gehäuse des Federspeicherbremszylinders und ein daraus folgendes Klemmen des Kolbens vermieden werden.

Die Lösung dieser Aufgabe ergibt sich aus den Merkmalen des Hauptanspruchs, während vorteilhafte Weiterbildungen der Erfindung den Unteransprüchen entnehmbar sind.

Die Erfindung geht demnach aus von einem Federspeicherbremszylinder, mit einem im Gehäuse des Federspeicherbremszylinders abgedichtet geführten, hutförmig mit einem zylindrischen Mittelteil und einem radial abstehenden Flansch ausgebildeten Kolben, in dem eine sich einerseits an einer Querwand des Kolbens und andererseits an einer Querwand des Gehäuses des Federspeicherbremszylinders abstützende vorgespannte Druckfeder angeordnet ist, wobei zwischen dem zylindrischen Mittelteil und dem Gehäuse des Federspeicherbremszylinders ein mit Druckluft beaufschlagbarer Ringraum gebildet ist, und bei dem die Querwand des Kolbens an einem Betriebsbremskolben eines mit dem Federspeicherbremszylinder zu einer Baueinheit zusammengefassten Druckluftbremszylinder anlegbar ist, um diesen bei Druckabfall im Ringraum mittels der Druckfeder im Bremssinn zu betätigen.

Zur Lösung der gestellten Aufgabe ist bei diesem Federspeicherbremszylinder gemäß der Erfindung vorgesehen, dass das zylindrische Mittelteil des Kolbens mit seiner zylindrischen Außenseite in einer Öffnung einer Trennwand zwischen dem Gehäuse des Federspeicherbremszylinders und einem Gehäuse des Druckluftbremszylinders sowie mit seiner zylindrischen Innenseite an einer zylindrischen Außenseite eines von der Querwand des Gehäuses des Federspeicherbremszylinders in Richtung zu der Querwand des Kolbens ragenden zylindrischen Führungselements geführt ist.

Der radiale Abstand zwischen den beiden Führungselementen ist im Wesentlichen durch die radiale Materialstärke des Mittelteils des Kolbens bestimmt und daher vorteilhaft gering, während die durch den axialen Abstand der beiden Führungselemente im eingeschobenen Zustand des Kolbens bestimmte axiale Führungslänge vergleichsweise groß ist. Durch diese zweifache radiale Führung des Kolbens ist die Gefahr eines Verklemmens des Kolbens aufgrund einer nicht zu vermeidenden Querkraft der Druckfeder gegenüber bekannten technischen Lösungen erheblich vermindert. Außerdem hat ein radial außen am Flansch des Kolbens gegenüber der Innenseite des Gehäuses des Federspeicherbremszylinders angeordnetes erstes Dichtelement keine Führungsaufgaben zu übernehmen, wodurch gegebenenfalls dennoch auftretende geringfügige Kippbewegungen elastisch ausgeglichen werden.

Vorzugsweise ist bei einer Weiterbildung der Erfindung vorgesehen, dass radial zwischen der zylindrischen Außenseite des zylindrischen Führungselements und der zylindrischen Innenseite des Mittelteils des Kolbens ein erster Führungsring angeordnet ist, und dass radial zwischen der Trennwand und der zylindrischen Außenseite des Mittelteils des Kolbens ein zweiter Führungsring angeordnet ist. Diese Führungsringe lassen sich an ihren Einbauorten mit vergleichsweise geringem Spiel anordnen sowie gut schmieren, wodurch größere Kippbewegungen vermieden werden und eine leichte Beweglichkeit des Kolbens gewährleistet ist.

Das radial außen am Flansch des Kolbens angeordnete erste Dichtelement braucht nur den mit Druckluft beaufschlagbaren Ringraum des Federspeicherbremszylinders nach außen abzudichten. Ein axial benachbart zum Führungsring in der Öffnung der Trennwand zwischen dem Gehäuse des Federspeicherbremszylinders und dem Gehäuse des Druckluftbremszylinders angeordnetes zweites Dichtelement dichtet den genannten Ringraum zu einem Druckraum des Druckluftbremszylinders sowie den Druckraum des Druckluftbremszylinders zu diesem Ringraum hin ab.

Bevorzugt ist das zylindrische Führungselement topfförmig ausgebildet und liegt mit seinem Boden an der Querwand des Gehäuses axial an. Dabei stützt sich die Druckfeder am Boden dieses zylindrischen Führungselements ab.

Schließlich kann vorgesehen sein, dass radial innerhalb der Druckfeder ein Rohr mit einem radial nach außen abstehenden endseitigen Flansch angeordnet ist, welches an der Druckfederseite der Querwand des Kolbens axial anliegt, und das die Druckfeder an dem Flansch des Rohrs axial abgestützt ist.

Die Erfindung wird nachstehend anhand eines in der beigefügten Zeichnung dargestellten Ausführungsbeispiels weiter erläutert.

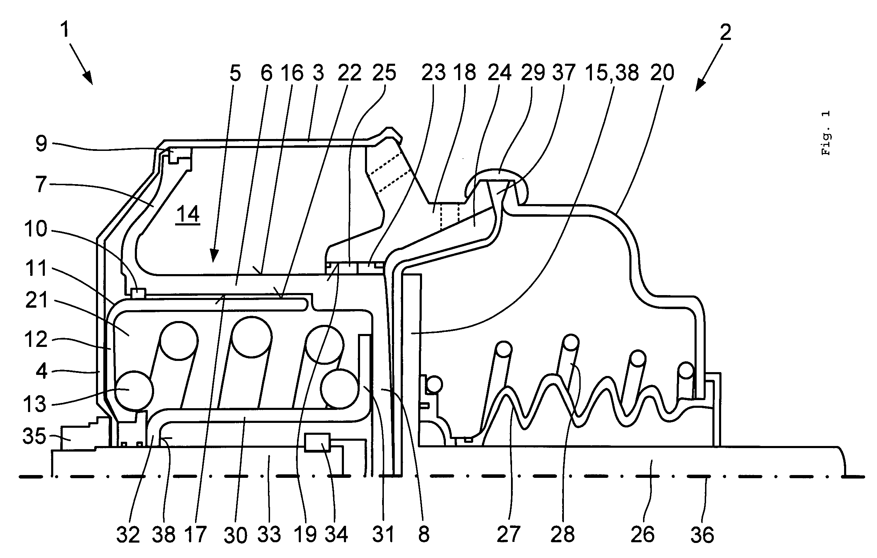

Der dargestellte Federspeicherbremszylinder 1 ist mit einem Druckluftbremszylinder 2 zu einer Baueinheit zusammengefasst und entspricht weitgehend der in Fig. 6 der DE 1 203 141 A1 dargestellten Baueinheit. Von der Baueinheit bestehend aus dem Federspeicherbremszylinder 1 und dem Druckluftbremszylinder 2 ist in der einzigen Figur nur eine Hälfte entlang einer Mittellinie 36 dargestellt.

Der Federspeicherbremszylinder 1 weist ein im Wesentlichen zylindrisches Gehäuse 3 mit einer endseitigen radialen Querwand 4 auf, in dem ein hutförmig ausgebildeter Kolben 5 axial verschiebbar angeordnet ist. Der Kolben 5 weist einen zylindrischen Mittelteil 6 sowie einen radial nach außen abstehenden ringförmigen Flansch 7 auf, und er ist durch eine sich radial erstreckende Querwand 8 zum Druckluftbremszylinder 2 hin abgeschlossen. Der Flansch 7 des Kolbens 5 ist gegenüber dem Gehäuse 3 des Federspeicherbremszylinders 1 durch ein erstes Dichtelement 9 abgedichtet, welches in einer radial außen am Flansch 7 ausgebildeten Ringnut aufgenommen ist. Dieses erste Dichtelement 9 ist so ausgebildet, dass es einen zwischen dem zylindrischen Mittelteil 6 des Kolbens 5 und dem Gehäuse 3 des Federspeicherbremszylinders 1 gebildeten sowie mit Druckluft beaufschlagbaren Ringraum 14 in Richtung zu der Querwand 4 des Gehäuses 3 des Federspeicherbremszylinders 1, das heißt nach außen hin, abdichtet. Das erste Dichtelement 9 ist elastisch ausgebildet und trägt daher kaum oder gar nicht zur Führung des Kolbens 5 bei. Abweichend davon weisen die aus der DE 10 2010 006 048 A1 und der DE 10 2010 006 049 A1 bekannten Federspeicherbremszylinder radial außen am Flansch 7 neben einem Dichtelement ein Führungselement für den Kolben 5 auf.

Wichtig ist auch ein topfförmiges, zylindrisches Führungselement 11, das innerhalb des Kolbens 5 angeordnet ist und dessen radial ausgerichteter Boden 12 radial innen eine Öffnung aufweist sowie an der Querwand 4 des Gehäuses 3 des Federspeicherbremszylinders 1 axial innen anliegt. Ein erster Führungsring 10 ist am querwandfernen Ende des Kolbens 5 in einer Aufnahmenut in der zylindrischen Innenseite 17 des Mittelteils 6 im Bereich des Übergangs vom zylindrischen Mittelteil 6 zum Flansch 7 des Kolbens 5 angeordnet. Dieser erste Führungsring 10 sitzt auf einer zylindrischen Außenseite 22 des zylindrischen Führungselements 11 und führt den Kolben 5 im Bereich seines flanschseitigen axialen Endes. Ein zweiter Führungsring 23 dient ebenfalls zur axial verschieblichen radialen Lagerung des Kolbens 5 und ist in einer Öffnung 19 einer Trennwand 18 zwischen dem Federspeicherbremszylinder 1 sowie dem Druckluftbremszylinder 2 angeordnet. Dieser zweite Führungsring 23 sitzt auf einer zylindrischen Außenseite 16 des Mittelteils 6 des Kolbens 5 und führt diesen im Bereich seines flanschfernen beziehungsweise querwandnahen Endes. Demnach stützt sich der Kolben 5 nach radial innen über den ersten Führungsring 10 auf dem zylindrischen Führungselement 11 und nach radial außen über den zweiten Führungsring 23 an der Trennwand 18 ab.

Axial benachbart zu dem zweiten Führungsring 23 ist ein zweites Dichtelement 25 angeordnet, das sowohl den Ringraum 14 zu einem Druckraum 24 des Druckluftbremszylinders 2 als auch vom Druckraum 24 zum Ringraum 14 hin abdichtet. Dies ist notwendig, da im Ruhezustand der Baueinheit, bestehend aus Federspeicherbremszylinder 1 und Druckluftbremszylinder 2, der Ringraum 14 druckluftbeaufschlagt ist, während der Druckraum 24 des Druckluftbremszylinders 2 überdrucklos ist, sowie umgekehrt der Fall eintreten kann, dass der Druckraum 24 mit Druckluft beaufschlagt ist, der Ringraum 14 jedoch ohne Überdruck ist.

In einem Ringraum 21 zwischen einem radial sehr weit innen angeordneten Rohr 30 und dem zylindrischen Führungselement 11 ist eine kräftig vorgespannte Druckfeder 13 angeordnet, die sich axial einerseits axial innen am Boden 12 des zylindrischen Führungselements 11 und andererseits über einen sich am Rohr 30 radial nach außen erstreckenden ringförmigen Flansch 31 an der Querwand 8 des Kolbens 5 abstützt. Das Rohr 30 stützt sich mit einem a-xialen Ende an der Querwand 8 des Kolbens 5 und mit seinem anderen axialen Ende an der Querwand 4 des Gehäuses 3 des Federspeicherbremszylinders 1 ab.

Wenn der Ringraum 14 des Federspeicherbremszylinders 1 mit Druckluft beaufschlagt ist, was einem normalem Betriebszustand der Baueinheit aus Federspeicherbremszylinder 1 und Druckluftbremszylinder 2 entspricht, ist die Druckkraft der Druckluft im Ringraum 14 größer als die auf den Kolben 5 wirkende Druckkraft der Druckfeder 13, so dass der Kolben 5 in der gezeichneten Stellung verharrt.

Wenn in diesem Betriebszustand der Druckraum 24 zwischen der Trennwand 18 und einer sich radial erstreckenden Druckplatte 38 eines Betriebsbremskolbens 15 zum gewollten Einleiten eines Bremsvorgangs mit Druckluft beaufschlagt wird, bewegt sich der Betriebsbremskolben 15 mit seiner Schubstange 26 in der Figur nach rechts, die eine nicht dargestellte Fahrzeugbremse im Bremssinn betätigt.

Der Druckraum 24 ist zum Betriebsbremskolben 15 hin durch eine Rollmembran 37 abgedichtet, die radial außen zwischen dem Gehäuse 20 des Druckluftbremszylinders 2 und der Trennwand 18 mittels eines Klemmrings 29 durchdicht eingeklemmt ist. Ein zwischen dem Gehäuse 20 des Druckluftbremszylinders 2 und der Schubstange 26 angeordneter Faltenbalg 27 hält Schmutz und Feuchtigkeit vom Druckluftbremszylinder 2 fern und eine schwache Druckfeder 28 dient als Rückholfeder für den Betriebsbremskolben 15 mit der Schubstange 26.

Fällt aus irgendeinem Grund der Druck der Druckluft im Bremssystem unter einen vorbestimmten Wert ab, so dass der Ringraum 14 mehr oder weniger überdrucklos wird, schiebt die kräftige vorgespannte Druckfeder 13 den Kolben 5 und damit auch den Betriebsbremskolben 15 mit der Schubstange 26 im Bremssinn in der Figur nach rechts, so dass automatisch eine Bremsung eingeleitet wird, ohne dass dazu die normalerweise notwendige Druckluft benötigt wird. Diese Funktion ist an sich bekannt und in der DE 1 203 141 A1 ausführlich beschrieben, deren diesbezügliche Offenbarung zum Gegenstand der vorliegenden Anmeldung gemacht wird.

Eine koaxial zur Schubstange 26 angeordnete Gewindespindel 33 ist durch Öffnungen in dem Rohr 30, dem Boden 12 des zylindrischen Führungselements 11 und der Querwand 4 des Gehäuses 3 des Federspeicherbremszylinders 1 nach axial außen geführt, wo eine Mutter 35 auf der Gewindespindel 33 aufgeschraubt ist. Mit Hilfe dieser Mutter 35 lässt sich ein radial überstehender Kopf 34 am gegenüberliegenden Ende der Gewindespindel 33 durch Drehen der Mutter 35 bis an die axial innere Stirnseite der Stirnwand 32 des Rohres 30 heranführen, wodurch die Druckfeder 13 axial gesichert und der Kolben 5 in der dargestellten Stellung axial festgehalten wird, selbst wenn der Ringraum 14 nicht mit Druckluft beaufschlagt ist. Auf diese Weise lässt sich erreichen, dass die durch die Druckfeder 13 bei Druckabfall im Ringraum 14 bewirkte Bremswirkung aufgehoben wird, um ein wegen Druckabfalls im Bremssystem abgebremstes Fahrzeug wieder bewegen zu können. Außerdem ist es möglich, die Baueinheit aus dem Federspeicherbremszylinder 1 und dem Druckluftbremszylinder 2 auszubauen, ohne dass die Schubstange 26 in die Bremsstellung bewegt wird, wenn der Ringraum 14 druckentlastet wird.

Die einzige Figur verdeutlicht, dass bei dem Federspeicherbremszylinder 1 gemäß der Erfindung aufgrund der Anordnung seiner beiden Führungsringe 10, 23 ein Verkippen des Kolbens 5 im Gehäuse 3 des Federspeicherbremszylinders 1 und ein daraus folgendes Verklemmen desselben vermieden wird. Dies ist vor allem dadurch erreicht, dass der Kolben 5 durch den ersten Führungsring 10 an dem zusätzlich eingebauten zylindrischen Führungselement 11 nach radial innen abgestützt ist, und sich nach radial außen an dem zweiten Führungsring 23 abstützt, welcher in der axialen Öffnung der Trennwand 18 angeordnet ist. Bei den bekannten Federspeicherbremszylindern erfolgt die Führung des Kolbens 5 bei einer Axialbewegung lediglich durch radial außen am Flansch 7 des Kolbens 5 angeordnete Führungsmittel, während im Bereich der axialen Öffnung in der Trennwand 18 nur eine Dichtungsanordnung vorgesehen ist.

Abweichend von dem in der Figur dargestellten Ausführungsbeispiel kann auf den ersten Führungsring 10 verzichtet werden, wenn die zylindrische Innenseite 17 des Mittelteils 6 des Kolbens 5 oder die zylindrische Außenseite 22 des zylindrischen Führungselements 11 mit einem Gleitstoff beschichtet ist.

Bei der hohlzylindrischen Ausbildung des Mittelteils 6 des Kolbens 5 und der zylindrischen Außenseite 22 des Führungselements 11 erfolgt die Axialführung des Kolbens 5 dann vorteilhaft über die vergleichsweise großflächigen radial gegenüberliegenden zylindrischen Flächen von Führungselement 11 und Kolbenmitteltei 6.

### Bezugzeichenliste

- 1: Federspeicherbremszylinder
- 2: Druckluftbremszylinder
- 3: Gehäuse des Federspeicherbremszylinders
- 4: Querwand des Gehäuse des Federspeicherbremszylinders
- 5: Kolben
- 6: Mittelteil des Kolbens
- 7: Flansch des Kolbens
- 8: Querwand des Kolbens
- 9: Erstes Dichtelement
- 10: Erster Führungsring
- 11: Zylindrisches Führungselement
- 12: Boden des zylindrischen Führungselements
- 13: Druckfeder
- 14: Ringraum
- 15: Betriebsbremskolben
- 16: Zylindrische Außenseite des Mittelteils des Kolbens
- 17: Zylindrische Innenseite des Mittelteils des Kolbens
- 18: Trennwand
- 19: Öffnung in der Trennwand
- 20: Gehäuse des Druckluftbremszylinders
- 21: Ringraum zur Aufnahme der Druckfeder
- 22: Zylindrische Außenseite des zylindrischen Führungselements
- 23: Zweiter Führungsring
- 24: Druckraum
- 25: Zweites Dichtelement
- 26: Schubstange
- 27: Faltenbalg
- 28: Rückholfeder
- 29: Klemmring
- 30: Rohr
- 31: Flansch des Rohres
- 32: Stirnwand des Rohres
- 33: Gewindespindel
- 34: Kopf an der Gewindespindel
- 35: Mutter
- 36: Mittellinie
- 37: Rollmembran
- 38: Druckplatte des Kolbens

## Patentansprüche

1. Federspeicherbremszylinder (1), mit einem im Gehäuse (3) des Federspeicherbremszylinders (1) abgedichtet geführten, hutförmig mit einem zylindrischen Mittelteil (6) und einem radial abstehenden Flansch (7) ausgebildeten Kolben (5), in dem eine sich einerseits an einer Querwand (8) des Kolbens (5) und andererseits an einer Querwand (4) des Gehäuses (3) des Federspeicherbremszylinders (1) abstützende vorgespannte Druckfeder (13) angeordnet ist, wobei zwischen dem zylindrischen Mittelteil (6) und dem Gehäuse (3) des Federspeicherbremszylinders (1) ein mit Druckluft beaufschlagbarer Ringraum (14) gebildet ist, und bei dem die Querwand (8) des Kolbens (5) an einem Betriebsbremskolben (15) eines mit dem Federspeicherbremszylinder (1) zu einer Baueinheit zusammengefassten Druckluftbremszylinder (2) anlegbar ist, um diesen bei Druckabfall im Ringraum (14) mittels der Druckfeder (13) im Bremssinn zu betätigen, **dadurch gekennzeichnet, dass** das zylindrische Mittelteil (6) des Kolbens (5) mit seiner zylindrischen Außenseite (16) in einer Öffnung (19) einer Trennwand (18) zwischen dem Gehäuse (3) des Federspeicherbremszylinders (1) und einem Gehäuse (20) des Druckluftbremszylinders (2) sowie mit seiner zylindrischen Innenseite (17) an einer zylindrischen Außenseite (22) eines von der Querwand (4) des Gehäuses (3) des Federspeicherbremszylinders (1) in Richtung zu der Querwand (8) des Kolbens (5) ragenden zylindrischen Führungselements (11) geführt ist.

2. Federspeicherbremszylinder nach Anspruch 1, **dadurch gekennzeichnet, dass** radial zwischen der zylindrischen Außenseite (22) des zylindrischen Führungselements (11) und der zylindrischen Innenseite (17) des Mittelteils (6) des Kolbens (5) ein erster Führungsring (10) angeordnet ist, und dass radial zwischen der Trennwand (18) und der zylindrischen Außenseite (16) des Mittelteils (6) des Kolbens (5) ein zweiter Führungsring (23) angeordnet ist.

3. Federspeicherbremszylinder nach Anspruch 1 oder 2, **dadurch gekennzeichnet, dass** in dem zu dem Gehäuse (3) des Federspeicherbremszylinders (1) benachbarten Bereich des Flansches (7) des Kolbens (5) ein den mit Druckluft beaufschlagbaren Ringraum (14) nach außen abdichtendes erstes Dichtelement (9) angeordnet ist.

4. Federspeicherbremszylinder nach Anspruch 1, 2 oder 3, **dadurch gekennzeichnet, dass** axial benachbart zum zweiten Führungsring (23) in der Öffnung (19) der Trennwand (18) zwischen dem Gehäuse (3) des Federspeicherbremszylinders (1) und dem Gehäuse (20) des Druckluftbremszylinders (2) ein den Ringraum (14) zu einem Druckraum (24) des Druckluftbremszylinders (2) hin sowie den Druckraum (24) zum Ringraum (14) hin abdichtendes zweites Dichtelement (25) angeordnet ist.

5. Federspeicherbremszylinder nach einem der Ansprüche 1 bis 4, **dadurch gekennzeichnet, dass** das zylindrische Führungselement (11) topfförmig ausgebildet ist, mit seinem Boden (12) an der Querwand (4) des Gehäuses (3) des Federspeicherbremszylinders (1) anliegt und sich die Druckfeder (13) am Boden (12) des zylindrischen Führungselements (11) abstützt.

6. Federspeicherbremszylinder nach einem der Ansprüche 1 bis 5, **dadurch gekennzeichnet, dass** radial innerhalb der Druckfeder (13) ein Rohr (30) mit einem radial nach außen abstehenden endseitigen Flansch (31) angeordnet ist, welches an der Druckfederseite der Querwand (8) des Kolbens (5) axial anliegt, und das die Druckfeder (13) an dem Flansch (31) des Rohres (30) axial abgestützt ist.

## Claims

1. Spring brake cylinder (1), having a piston (5) which is guided in a sealed manner in the housing (3) of the spring brake cylinder (1), is configured in a hat-shaped manner with a cylindrical centre part (6) and a radially protruding flange (7), and in which a prestressed compression spring (13) is arranged which is supported on one side on a transverse wall (8) of the piston (5) and on the other side on a transverse wall (4) of the housing (3) of the spring brake cylinder (1), an annular space (14) which can be loaded with compressed air being formed between the cylindrical centre part (6) and the housing (3) of the spring brake cylinder (1), and in which the transverse wall (8) of the piston (5) can bear against a service brake piston (15) of an air brake cylinder (2) which is combined with the spring brake cylinder (1) to form a structural unit, in order to actuate the said air brake cylinder (2) in the braking direction by means of the compression spring (13) in the case of a pressure drop in the annular space (14), **characterized in that** the cylindrical centre part (6) of the piston (5) is guided with its cylindrical outer side (16) in an opening (19) of a dividing wall (18) between the housing (3) of the spring brake cylinder (1) and a housing (20) of the air brake cylinder (2) and with its cylindrical inner side (17) on a cylindrical outer side (22) of a cylindrical guide element (11) which protrudes from the transverse wall (4) of the housing (3) of the spring brake cylinder (1) in the direction of the transverse wall (8) of the piston (5).

2. Spring brake cylinder according to Claim 1, **characterized in that** a first guide ring (10) is arranged radially between the cylindrical outer side (22) of the cylindrical guide element (11) and the cylindrical inner side (17) of the centre part (6) of the piston (5), and **in that** a second guide ring (23) is arranged radially between the dividing wall (18) and the cylindrical outer side (16) of the centre part (6) of the piston (5).

3. Spring brake cylinder according to Claim 1 or 2, **characterized in that** a first sealing element (9) which seals the annular space (14) which can be loaded with compressed air to the outside is arranged **in that** region of the flange (7) of the piston (5) which is adjacent to the housing (3) of the spring brake cylinder (1).

4. Spring brake cylinder according to Claim 1, 2 or 3, **characterized in that** a second sealing element (25) which seals the annular space (14) toward a pressure space (24) of the air brake cylinder (2) and the pressure space (24) towards the annular space (14) is arranged axially adjacently with respect to the second guide ring (23) in the opening (19) of the dividing wall (18) between the housing (3) of the spring brake cylinder (1) and the housing (20) of the air brake cylinder (2).

5. Spring brake cylinder according to one of Claims 1 to 4, **characterized in that** the cylindrical guide element (11) is of pot-shaped configuration, bears with its bottom (12) against the transverse wall (4) of the housing (3) of the spring brake cylinder (1), and the compression spring (13) is supported on the bottom (12) of the cylindrical guide element (11).

6. Spring brake cylinder according to one of Claims 1 to 5, **characterized in that** a tube (30) with a radially outwardly protruding end-side flange (31) is arranged radially within the compression spring (13), which tube (30) bears axially against the compression spring side of the transverse wall (8) of the piston (5), and **in that** the compression spring (13) is supported axially on the flange (31) of the tube (30).

## Revendications

1. Cylindre de frein à ressort accumulateur (1), comprenant un piston (5) en forme de chapeau, guidé de manière hermétique dans le boîtier (3) du cylindre de frein à ressort accumulateur (1), avec une partie centrale cylindrique (6) et une bride saillant radialement (7), un espace annulaire (14) pouvant être sollicité avec de l'air sous pression étant formé entre la partie centrale cylindrique (6) et le boîtier (3) du cylindre de frein à ressort accumulateur (1), et dans lequel la paroi transversale (8) du piston (5) peut être appliquée contre un piston de frein de service (15) d'un cylindre de frein à air comprimé (2) réuni au cylindre de frein à ressort accumulateur (1) pour constituer une unité structurelle, afin d'actionner le cylindre de frein à air comprimé, en cas de chute de pression dans l'espace annulaire (14), au moyen du ressort de compression (13) dans le sens du freinage, **caractérisé en ce que** la partie centrale cylindrique (6) du piston (5) est guidée avec son côté extérieur cylindrique (16) dans une ouverture (19) d'une paroi de séparation (18) entre le boîtier (3) du cylindre de frein à ressort accumulateur (1) et un boîtier (20) du cylindre de frein à air comprimé (2) et avec son côté intérieur cylindrique (17) contre un côté extérieur cylindrique (22) d'un élément de guidage (11) cylindrique faisant saillie depuis la paroi transversale (4) du boîtier (3) du cylindre de frein à ressort accumulateur (1) dans la direction de la paroi transversale (8) du piston (5).

2. Cylindre de frein à ressort accumulateur selon la revendication 1, **caractérisé en ce que** radialement entre le côté extérieur cylindrique (22) de l'élément de guidage cylindrique (11) et le côté intérieur cylindrique (17) de la partie centrale (6) du piston (5), est disposée une première bague de guidage (10) et **en ce que** radialement entre la paroi de séparation (18) et le côté extérieur cylindrique (16) de la partie centrale (6) du piston (5), est disposée une deuxième bague de guidage (23).

3. Cylindre de frein à ressort accumulateur selon la revendication 1 ou 2, **caractérisé en ce que** dans la région de la bride (7) du piston (5) adjacente au boîtier (3) du cylindre de frein à ressort accumulateur (1) est disposé un premier élément d'étanchéité (9) étanchéifiant vers l'extérieur l'espace annulaire (14) pouvant être sollicité avec de l'air sous pression.

4. Système de frein à ressort accumulateur selon la revendication 1, 2 ou 3, **caractérisé en ce qu'**un deuxième élément d'étanchéité (25) étanchéifiant l'espace annulaire (14) vers un espace de pression (24) du cylindre de frein à air sous pression (2) et étanchéifiant l'espace annulaire (24) vers l'espace annulaire (14), est disposé axialement à côté de la deuxième bague de guidage (23) dans l'ouverture (19) de la paroi de séparation (18) entre le boîtier (3) du cylindre de frein à ressort accumulateur (1) et le boîtier (20) du cylindre de frein à air sous pression (2).

5. Cylindre de frein à ressort accumulateur selon l'une quelconque des revendications 1 à 4, **caractérisé en ce que** l'élément de guidage cylindrique (11) est réalisé en forme de pot, s'applique avec son fond (12) contre la paroi transversale (4) du boîtier (3) du cylindre de frein à ressort accumulateur (1) et le ressort de compression (13) s'applique contre le fond (12) de l'élément de guidage cylindrique (11).

6. Cylindre de frein à ressort accumulateur selon l'une quelconque des revendications 1 à 5, **caractérisé en ce que** radialement à l'intérieur du ressort de compression (13) est disposé un tube (30) avec une bride (31) du côté de l'extrémité faisant saillie radialement vers l'extérieur, laquelle s'applique axialement au niveau du côté du ressort de compression de la paroi transversale (8) du piston (5), et **en ce que** le ressort de compression (13) est supporté axialement contre la bride (31) du tube (30).
